# EUROPEAN PATENT SPECIFICATION

(11) **EP 1 561 573 B1**
(45) Date of publication and mention of the grant of the patent: **28.11.2007**
(21) Application number: 04425066.0
(22) Date of filing: 06.02.2004
(51) Int. Cl.: B32B 15/08, B44C 5/04

(54) **Decorative Plastics Laminate and Process for its Production.**
Dekoratives Kunststofflaminat und Verfahren zu dessen Herstellung
Stratifié plastique décoratif et procédé pour sa fabrication

(43) Date of publication of application: 10.08.2005
(73) Proprietor: ABET LAMINATI S.p.A., I-12042 Bra (Cuneo) (IT)
(72) Inventor: Minini, Fabio, 12042 Bra (Cuneo) (IT)
(74) Representative: Rambelli, Paolo

(56) References cited:
- EP-A- 0 249 583
- EP-A- 0 327 095
- EP-A- 1 118 710
- WO-A-95/30552
- GB-A- 1 566 086
- US-A- 3 701 711
- US-A- 4 902 364
- DATABASE WPI Section Ch, Week 197935 Derwent Publications Ltd., London, GB; Class G05, AN 1979-63962B XP002299349 & JP 54 092404 A (NIPPON SYNTHETIC CHEM IND CO) 21 July 1979 (1979-07-21)
- PATENT ABSTRACTS OF JAPAN vol. 0176, no. 64 (M-1523), 8 December 1993 (1993-12-08) & JP 5 220917 A (TOPPAN PRINTING CO LTD), 31 August 1993 (1993-08-31)

## Description

This invention relates to a decorative plastics laminate of a type comprising a plurality of superimposed sheets based on cellulose impregnated with thermosetting resin and intimately bound together by pressure and heat and, on at least one surface thereof, an outer layer of a sheet of metal material.

The high pressure decorative plastics laminate known as HPL currently manufactured are typically formed from a pack of sheets of kraft paper impregnated with phenolic resin and at least one decorative sheet located on at least one surface of the pack of sheets of kraft paper, and made up of alpha-cellulose including mineral fillers and pigments impregnated with melamine resin. A surface protective sheet known as an "overlay" of alpha-cellulose impregnated with melamine resin may be superimposed on the decorative sheet.

HPL formed from a pack of sheets of kraft paper with a sheet of aluminium on at least one surface of the pack are also known. In such HPL an overlay layer of alpha-cellulose impregnated with melamine resin, pre-treated with epoxide to encourage adhesion between the aluminium and the pack of kraft paper, may also be present between the aluminium sheet and the pack of sheets of kraft paper.

A recurrent scheme for decorative plastics laminates currently on the market is for example as follows:
1) overlay
2) decorative sheet
3) pack of sheets of kraft paper
or:
1') aluminium sheet
2') overlay treated with epoxide
3) pack of sheets of kraft paper
in which:
1) overlay comprising alpha-cellulose in a weight generally from 20 to 40 g/m² impregnated with melamine resin,
2) self-coloured decorative sheet or printed or screenprinted decorative sheet comprising alpha-cellulose including mineral fillers and pigments in a weight generally from 60 to 160 g/m² impregnated with melamine resin,
1') aluminium sheet, possibly treated with epoxide,
2') overlay comprising alpha-cellulose in a weight generally of 20 to 40 g/m² impregnated with melamine resin, pre-treated with epoxide,
3) pack comprising a plurality of sheets of kraft paper generally having a weight of 120 to 260 g/m² impregnated with phenolic resin.

Typically high pressure decorative plastics laminates are manufactured in a thickness varying from 0.5 to 30 mm by subjecting the sheets impregnated with the corresponding resins to a pressure of generally from 5 to 10 MPa and a temperature within the range from 120 to 160°C.

The product so obtained has excellent resistance to water and chemical agents, generally accompanied by good mechanical properties. The laminate is thus normally used for coating walls, parts of furniture, work surfaces, dividers and the like.

The purpose of this invention is to provide a decorative plastics laminate of particular aesthetic value without however adversely affecting the mechanical and strength properties typical of laminates according to the known art.

This object is accomplished through a decorative plastics laminate of the type mentioned above, characterised in that the outer layer of a sheet of metal material is provided on the outer surface with a plurality of outwardly facing recesses arranged in a predetermined pattern, the said recesses being filled with substantially transparent plastics material so that the said recesses are visible but are substantially imperceptible to touch.

The plastics laminate so obtained offers special decorative effects thanks to the fact that the recesses on its outer metal surface are substantially filled flush with that surface so that the metal surface appears to have a sculptured appearance while it remains smooth or nevertheless uniform to the touch.

Another object of the invention is a process for the production of decorative plastics laminates comprising the stages of:
stacking a plurality of cellulose-based sheets impregnated with thermosetting resin and dried,
characterized in that it comprises the stages of:
placing at least one sheet of metal material on the said plurality of stacked cellulose-based sheets in such a way as to cover them externally,
placing on the stack so constructed at least one supporting sheet of plastics material provided on one of its surfaces with a plurality of macular deposits of a second transparent plastics material arranged in a predetermined pattern, with the said surface in contact with the said sheet of metal material, and
subjecting the stack so obtained to pressure and heat in order to bind the cellulose-based sheets together and to the sheet of metal material, and to cause the formation of recesses in the said sheet of metal material corresponding to the areas of contact with the said macular deposits, fusion of the plastics material in the said macular deposits and filling of the said recesses with the said fused plastic material.

Some preferred but not restrictive embodiments of the invention will now be described with reference to the appended drawings, in which:

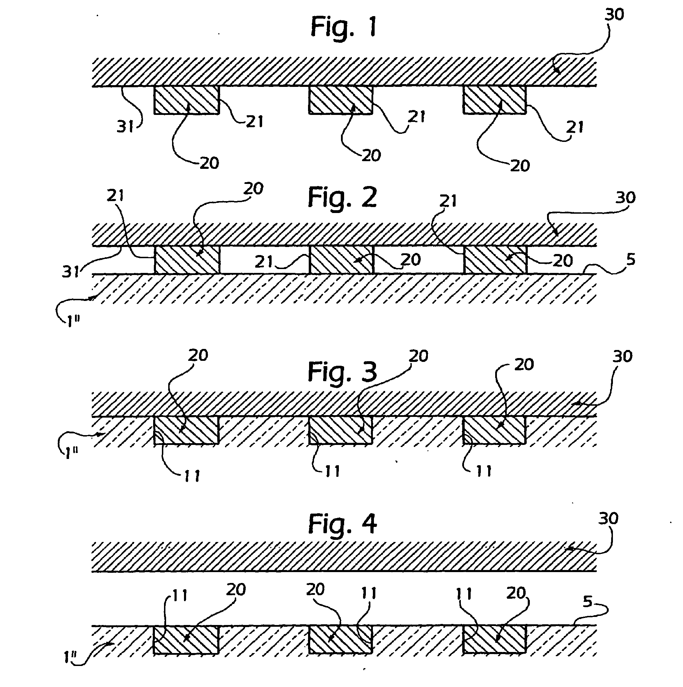

- figures 1 to 4 are diagrammatic illustrations in cross-section of the components of a process for the production of decorative plastics laminates according to the invention during stages of the operation.

Two preferred schemes for the plastics laminate according to the invention are provided by way of example.

### Scheme 1

(1") Decorative metal sheet
(2') Overlay treated with epoxide
(3) Pack of sheets of kraft paper

### Scheme 2

(1") Decorative metal sheet
(3) Pack of sheets of kraft paper

The layers of a conventional type, that is the overlay layer treated with epoxide and the pack of sheets of kraft paper, are indicated in schemes 1 and 2 using the same reference numbers (2') and (3) respectively as are used as a reference for the schemes previously illustrated according to the known art. (1") indicates a layer formed of a sheet of metal material, preferably aluminium. The overlay layer (2') indicated in scheme 1 is used to encourage adhesion of the metal sheet to the pack of sheets of kraft paper. In the case where the metal layer is subjected to epoxide treatment of the conventional type this overlay layer (2') is no longer necessary and may therefore be absent, as in scheme 2. Other possible schemes are for example the following:

### Scheme 3

(1") Decorative metal sheet
(2') Overlay
(3) Pack of sheets of kraft paper
(2') Overlay
(1") Decorative metal sheet
or:

### Scheme 4

(1") Decorative metal sheet
(2') Overlay
(3) Pack of sheets of kraft paper
(4) Balancing layer

In scheme 3 the arrangement of layers (1") and (2') in scheme 1 is reproduced in mirror image form with reference to an ideal plane identified by the pack of sheets of kraft paper (3). In scheme 4 a sheet having the function of a balancing layer of the conventional type, designed to prevent any warping of the laminate following the manufacturing process is located on the surface of the pack of sheets of kraft paper (3) opposite which layers (1") and (2') are located. In the schemes described above the layer(s) of metal sheet (1") is/are arranged as the outermost layer(s) of the laminate so as to present a free surface 5 (see for example Figure 4) which is not in contact with other layers.

Preferably metal sheet (1") is made in such a way that this free surface has a bright appearance. This is not however essential for the purposes of the invention and metal sheet (1") may have a free surface with a matt or satin appearance.

As illustrated in Figure 4, free surface 5 of metal layer (1") has a plurality of recesses 11 located in a predetermined pattern. These recesses 11 are filled with substantially transparent plastics material 20 substantially flush with the surface of the metal layer (1"), as a result of which the surface of metal sheet (1") appears to have a sculptured appearance while it remains smooth or nevertheless uniform to the touch, that is recesses 11 on that surface are substantially imperceptible.

The following process is used according to the invention to obtain this effect.

First of all a supporting sheet 30 of plastics material, preferably polyester, is provided and on this is deposited another plastics material 20, preferably copolyamide, having a melting point Td, or a melting range, which is below the melting point Ts of the plastics material of sheet 30. Deposition is carried out at a temperature Tp intermediate between temperatures Td and Ts. In this way plastics material 20 which is deposited is substantially fused, and is therefore deposited as drops on supporting sheet 30, and these can then be arranged and shaped into a predetermined pattern. By cooling the supporting sheet to a temperature below the melting point Td the drops of plastics material solidify, forming solid macular deposits 21 which maintain the desired pattern on the supporting sheet (see Figure 1). This deposition procedure is in itself known, and will not therefore be further described.

Individual sheets of the laminate are produced, and in particular impregnated, in a conventional way, for example in a continuous machine in which after being immersed in the resin used the web of paper enters a drying furnace at a temperature of 120°C to 160°C and is then cut to the desired format.

The sheets of kraft paper (3) and the overlay layer(s) (2') are then stacked. Subsequently the metal sheet (1") is laid on the overlay(s) (2'), so as to cover the stack of layers so obtained externally. Finally supporting sheet 30 with the solid deposits 21 of plastics material 20 is laid on metal layer (1") with side 31 bearing these deposits facing the free surface 5 of the metal layer (1'') (see Figure 2). The pack so obtained is then subjected to a pressure in a range of values normally used in the field of HPL manufacture, for example more than 5 MPa, and a high temperature, above the melting point Td, in a batch press. This combined action of temperature and pressure brings about cross-linking of the resins in a conventional way. In addition to this, this action causes the formation of recesses 11 in the metal sheet (1") in the areas in contact with deposits 21 on supporting sheet 30. Of course the metal sheet (1") must be sufficiently thin to be able to deform through the action of pressure in the batch press. Furthermore, the effect of temperature and pressure also brings about melting of the plastics material 20 of deposits 21, which is then caused to fill recesses 11 in the metal sheet (1") (see Figure 3).

When the laminate is cooled the drops of plastics material again solidify adhering to surface 5 of the metal layer (1") within recesses 11. When supporting sheet 30 of plastics material is removed the desired pattern is thus transferred to the metal layer (1") of the laminate (see Figure 4).

An example of a decorative laminate obtained according to the invention is now described.

### Example

A decorative laminate according to the configuration indicated in scheme 1 was prepared. Conventional materials such as those indicated in the introductory part to this description were used to prepare the pack of sheets of kraft paper and the overlay. A sheet of polyester, for example the product from Nuroll S.p.A. marketed under the name Nu Roll^{®} PXE was used as the supporting sheet of plastics material. The deposits on this supporting sheet were of copolyamide, for example the product EMS-GRILTECH marketed under the name Griltex^{®} D 1549A. The abovementioned sheets were stacked in a batch press in which they were subjected to a temperature of 130°C and a pressure of more than 5 MPa.

The laminate so obtained had optimum technical characteristics comparable to those of an HPL laminate.

The decorative effect obtained is particularly useful thanks to the fact that the outer surface of the laminate appears to have a sculptured appearance, while it remains smooth or in any event uniform to the touch, that is the recesses on that outer surface are substantially imperceptible.

It is intended that the embodiments described should be regarded as examples of embodiments of the invention; the invention is however susceptible of modification as regards the shape and arrangement of the parts, details of construction and functioning, according to the numerous possible variants which may appear appropriate to those skilled in the art. For example several packs of sheets of superimposed kraft paper separated by parting layers of the conventional type may be present within the laminate.

## Claims

1. Process for the production of decorative plastics laminates, comprising the stages of:
stacking a plurality of cellulose-based sheets (2', 3) impregnated with thermosetting resin and dried, and
placing at least one sheet of metal material (1") on the said plurality of stacked cellulose-based sheets (2', 3) so as to cover them externally,
**characterised in that** it comprises the stages of:
placing on the stack so constructed at least one supporting sheet (30) of plastics material provided with a plurality of macular deposits (21) of a second transparent plastics material (20) arranged in a predetermined pattern on one surface (31) thereof, with the said surface (31) in contact with the said sheet of metal material (1"), and
subjecting the stack so obtained to pressure and heat to bind the cellulose-based sheets (2', 3) together and to the sheet of metal material (1"), and to cause the formation of recesses (11) in the said sheet of metal material (1'') in the areas of contact with the said macular deposits (21), melting of the plastics material (20) of the said macular deposits (21) and filling of the said recesses (11) with the said molten plastics material (20).

2. Process according to claim 1, also comprising a stage of cooling the laminate so as to cause solidification of the said molten plastics material (20) within the said recesses.

3. Process according to claim 2, also comprising a stage of removing the said sheet of plastics supporting material (30) after the said cooling stage.

4. Process according to one of the preceding claims, in which the said plastics material of the supporting sheet (30) is polyester, the said filling plastics material (20) is copolyamide, and the said layer of metal material (1") is aluminium.

5. Process according to one of the preceding claims, in which the said cellulose-based sheets (2', 3) comprise a pack of sheets of kraft paper (3), and an alpha-cellulose overlay impregnated with melamine resin (2') placed between the said sheet (3) and the said at least one layer of metal material (1")

6. Decorative plastics laminate including a plurality of superimposed cellulose-based sheets (2', 3) impregnated with thermosetting resins bound together by pressure and heat, **characterised in that** it comprises an outer layer of a sheet of metal material (1") on at least one of its surfaces provided on the outer surface (5) of a plurality of outwardly facing recesses (11) arranged according to a predetermined pattern, the said recesses (11) being filled with substantially transparent plastics material (20) in such a way that the said recesses (11) can be seen but are substantially imperceptible to touch.

7. Laminate according to claim 6, **characterised in that** the said plastics filling material (20) is polyamide, and the said layer of metal material (1") is aluminium.

8. Laminate according to claim 6 or 7, in which the said cellulose-based sheets (2', 3) comprise a pack of sheets of kraft paper (3) and an alpha-cellulose overlay impregnated with melamine resin (2') located between the said pack (3) and the said at least one layer of metal material (1").

## Patentansprüche

1. Verfahren zur Herstellung dekorativer Kunststofflaminate, umfassend die folgenden Schritte:
das Stapeln einer Mehrzahl von dünnen Platten auf Cellulosebasis (2', 3), die mit Duroplast imprägniert und getrocknet wurden, und
das Platzieren von mindestens einer dünnen Platte aus Metallmaterial (1") auf der Mehrzahl von gestapelten dünnen Platten auf Cellulosebasis (2', 3), um diese äußerlich abzudecken,
**dadurch gekennzeichnet, dass** es die folgenden Schritte umfasst:
das Platzieren von mindestens einer dünnen Trägerplatte (30) aus Kunststoffmaterial auf dem so errichteten Stapel, welche mit einer Mehrzahl von fleckenartigen Ablagerungen (21) aus einem zweiten transparenten Kunststoffmaterial (20) versehen ist, die an einer ihrer Oberflächen (31) in einem vorgegebenen Muster angeordnet sind, wobei die Oberfläche (31) mit der dünnen Platte aus Metallmaterial (1") in Kontakt steht, und
das Einwirkenlassen von Druck und Wärme auf den so erhaltenen Stapel, um die dünnen Platten auf Cellulosebasis (2', 3) aneinander und an die dünne Platte aus Metallmaterial (1") zu binden und um die Bildung von Vertiefungen (11) in der dünnen Platte aus Metallmaterial (1") in den Kontaktbereichen mit den fleckenartigen Ablagerungen (21), das Schmelzen des Kunststoffmaterials (20) der fleckenartigen Ablagerungen (21) und das Füllen der Vertiefungen (11) mit dem geschmolzenen Kunststoffmaterial (20) zu bewirken.

2. Verfahren gemäß Anspruch 1, außerdem umfassend einen Schritt des Abkühlens des Laminats, um eine Verfestigung des geschmolzenen Kunststoffmaterials (20) innerhalb der Vertiefungen zu bewirken.

3. Verfahren gemäß Anspruch 2, außerdem umfassend einen Schritt des Entfernens der dünnen Platte aus Kunststoffträgermaterial (30) nach dem Kühlschritt.

4. Verfahren gemäß einem der vorhergehenden Ansprüche, wobei das Kunststoffmaterial der dünnen Trägerplatte (30) Polyester, das Kunststofffiillmaterial (20) Copolyamid und die Lage aus Metallmaterial (1") Aluminium ist.

5. Verfahren gemäß einem der vorhergehenden Ansprüche, wobei die dünnen Platten auf Cellulosebasis (2', 3) ein Bündel von Kraftpapierblättern (3) und eine mit Melaminharz imprägnierte Alphacellulose-Deckschicht (2'), die zwischen der dünnen Platte (3) und der mindestens einen Lage aus Metallmaterial (1") angeordnet ist, umfassen.

6. Dekoratives Kunststofflaminat, enthaltend eine Mehrzahl übereinanderliegender, mit Duroplasten imprägnierter dünner Platten auf Cellulosebasis (2', 3), die durch Druck und Wärme aneinander gebunden sind, **dadurch gekennzeichnet, dass** es an mindestens einer seiner Oberflächen eine äußere Lage aus einer dünnen Platte aus Metallmaterial (1") umfasst, die an der Außenfläche (5) mit einer Mehrzahl von nach außen gerichteten, gemäß einem vorgegebenen Muster angeordneten Vertiefungen (11) versehen ist, wobei die Vertiefungen (11) mit einem im Wesentlichen transparenten Kunststoffmaterial (20) in einer solchen Art und Weise gefüllt sind, dass die Vertiefungen (11) gesehen werden können, aber durch Berührung im Wesentlichen nicht wahrnehmbar sind.

7. Laminat gemäß Anspruch 6, **dadurch gekennzeichnet, dass** das Kunststofffüllmaterial (20) Polyamid und die Lage aus Metallmaterial (1") Aluminium ist.

8. Laminat gemäß Anspruch 6 oder 7, wobei die dünnen Platten auf Cellulosebasis (2', 3) ein Bündel von Kraftpapierblättern (3) und eine mit Melaminharz imprägnierte Alphacellulose-Deckschicht (2'), die sich zwischen dem Bündel (3) und der mindestens einen Lage aus Metallmaterial (1") befindet, umfassen.

## Revendications

1. Procédé de production de stratifiés plastiques décoratifs, comprenant les étapes consistant à :
empiler une pluralité de feuilles à base de cellulose (2', 3) imprégnées de résine thermodurcissable et séchées, et
placer au moins une feuille de matériau métallique (1") sur ladite pluralité de feuilles empilées à base de cellulose (2', 3) afin de les recouvrir de manière externe, **caractérisé en ce qu'**il comprend les étapes consistant à :
placer sur la pile ainsi constituée au moins une feuille de support (30) de matériau plastique munie d'une pluralité de dépôts maculaires (21) d'un deuxième matériau plastique transparent (20) agencés dans une configuration prédéterminée sur une surface (31) de celle-ci, avec ladite surface (31) en contact avec ladite feuille de matériau métallique (1"), et
soumettre la pile ainsi obtenue à la pression et la chaleur pour lier les feuilles à base de cellulose (2', 3) ensemble et à la feuille de matériau métallique (1"), et pour entraîner la formation d'évidements (11) dans ladite feuille de matériau métallique (1") dans les zones de contact avec lesdits dépôts maculaires (21), faire fondre le matériau plastique (20) desdits dépôts maculaires (21) et remplir lesdits évidements (11) avec ledit matériau plastique fondu (20).

2. Procédé selon la revendication 1, comprenant également une étape de refroidissement du stratifié de manière à entraîner la solidification dudit matériau plastique fondu (20) dans lesdits évidements.

3. Procédé selon la revendication 2, comprenant également une étape de retrait de ladite feuille de plastique supportant le matériau (30) après ladite étape de refroidissement.

4. Procédé selon l'une quelconque des revendications précédentes, dans lequel ledit matériau plastique de la feuille de support (30) est du polyester, ledit matériau plastique de remplissage (20) est du copolyamide et ladite couche de matériau métallique (1") est de l'aluminium.

5. Procédé selon l'une quelconque des revendications précédentes, dans lequel lesdites feuilles à base de cellulose (2', 3) comprennent un paquet de feuilles de papier kraft (3) et un revêtement d'alpha cellulose imprégné de résine de mélamine (2') placé entre ladite feuille (3) et ladite au moins une couche de matériau métallique (1").

6. Stratifié plastique décoratif comprenant une pluralité de feuilles à base de cellulose superposées (2', 3) imprégnées de résines thermodurcissables liées ensemble par pression et chaleur, **caractérisé en ce qu'**il comprend une couche externe d'une feuille de matériau métallique (1") sur au moins l'une de ses surfaces agencée sur la surface externe (5) d'une pluralité d'évidements orientés vers l'extérieur (11) agencés selon une configuration prédéterminée, lesdites évidements (11) étant remplis de matériau plastique sensiblement transparent (20) de sorte que lesdits évidements (11) soient visibles mais soient sensiblement imperceptibles au toucher.

7. Stratifié selon la revendication 6, **caractérisé en ce que** ledit matériau plastique de remplissage (20) est du polyamide, et ladite couche de matériau métallique (1") est de l'aluminium.

8. Stratifié selon la revendication 6 ou 7, dans lequel lesdites feuilles à base de cellulose (2', 3) comprennent un paquet de feuilles de papier kraft (3) et un revêtement d'alpha cellulose imprégné de résine de mélanine (2') situé entre ledit paquet (3) et ladite au moins une couche de matériau métallique (1").
